Europäisches Patentamt

European Patent Office

Office européen des brevets

(19)

(11) **EP 1 594 308 A1**

(12) **EUROPEAN PATENT APPLICATION**

(43) Date of publication:
**09.11.2005 Bulletin 2005/45**

(51) Int Cl.7: **H04N 5/217**

(21) Application number: **04392022.2**

(22) Date of filing: **07.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **Dialog Semiconductor GmbH**
**73230 Kirchheim/Teck-Nabern (DE)**

(72) Inventor: **Schweng, Detlef**
**71384 Weinstadt-Schnait (DE)**

(74) Representative: **Schuffenecker, Thierry**
**97, chemin de Cassiopée,**
**Domaine de l'étoile**
**06610 La Gaude (FR)**

(54) **Single line Bayer filter RGB bad pixel correction**

(57)     In large arrays of image sensing devices, like CCDs, a small number of defective image elements (pixels) must be tolerated and the resulting image degradation should be eliminated through bad pixel correction. The disclosed invention provides a mechanism to effectively detect defective pixels "on the fly" in a Bayer RGB type color image sensor, optimized for low cost applications. It calculates a variable threshold based on signal changes on nearby pixels of the same color within a single row and checks if the signal change of the pixel under test exceeds said variable threshold. It further performs a plausibility check using nearby pixels of an other color in the same row.

*FIG. 6*

**Description**

**Technical field of the invention**

The present invention relates to a defective pixel correction circuit for correcting a defective pixel in a solid imaging device and, more particularly, to charge coupled device (CCD) and CMOS imagers as used in digital cameras, employing a pixel correction circuit with reduced memory requirements.

**Background art**

In large arrays of image sensing devices, arranged in a matrix of rows and columns, like CCDs a small number of defective image elements (pixels), caused by a variety of manufacturing deficiencies, must be tolerated, especially for low cost applications. The reason may be, for example, manufacturing process defects, which may show up as dead spots (totally dark), hot spots (totally white) and weak spots. Such a defective pixel is generated not only as an initial defects, but it is also generated because of aging, as the solid-state image pick-up device is used for a long period time. Similar such defective pixels may change with operating conditions, like temperature of the sensor or supply voltage. The position of the defective pixel itself is fixed. Therefore, generally, the image signal from the defective pixel is often corrected by storing the position thereof in advance.

More specifically, the defective pixel is detected at the time of delivery of the image-sensing device and thereafter periodically, the position information of the defective element is generated and stored periodically in a storing device. The image signal corresponding to the defective pixel is replaced by interpolation, using image signals from the pixels around the defective pixel. Such an interpolation is performed after the image-sensing device takes in the image signal and before processing the signal, by reading the position information of the defective pixel from the storing device and by interpolating the defective pixel by using the image pick-up signals one-dimensionally or two-dimensionally there around.

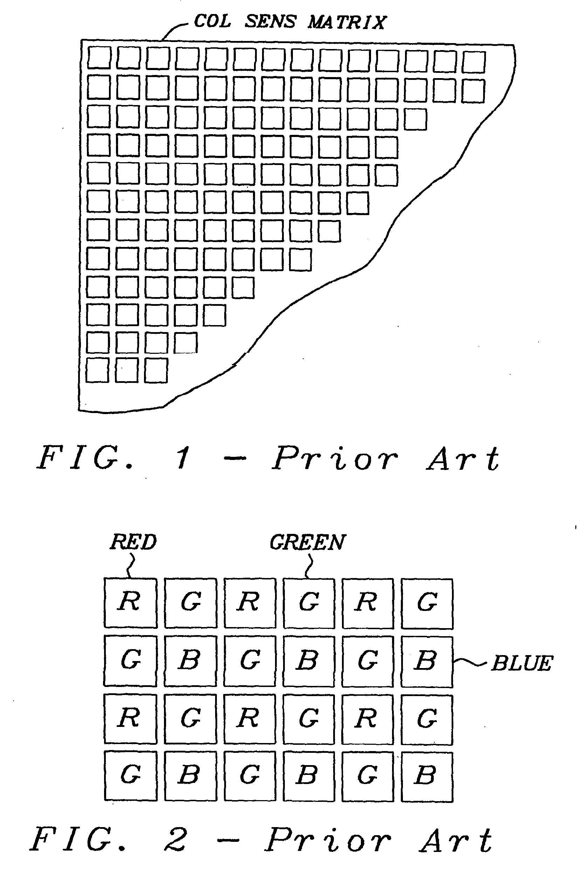

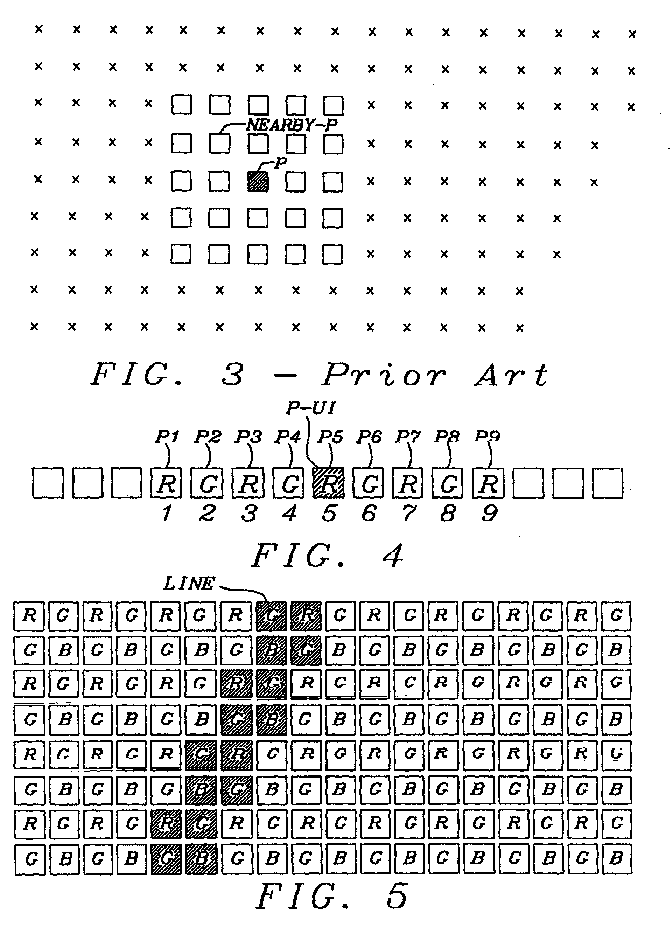

Fig. 1 shows a model for a photo-sensing array. Fig. 2 shows the principal concept of Bayer RGB layout, which has twice as many green pixels as there are of the two other colors red and blue. Interpreting neighboring pixels in two dimensions is visualized in Fig 3.

U.S. Patent 5,805,216 (to Tabei, et al.) describes a circuit to correct a defective pixel in a solid imaging device (CCD). It calculates magnitudes of boundaries from signals of eight peripheral pixels and produces an interpolation signal to correct the defective pixel.

U.S. Patent 5,047,863 (to Pape, et al.) shows a defect correction circuit including inoperative pixel detection. As disclosed, when a threshold indicates an inoperative pixel, such pixel data is replaced by image pixel data from an operative pixel immediately prior to the defective pixel.

U.S. Patents 4,535,359 (to Fearnside.) discloses an apparatus for defect correction in solid-state imaging. The disclosure uses the fact, that edges of dead and hot pixels correspond with very high spatial frequency components, to detect such dead or hot pixels.

**Summary of the invention**

In large arrays of image sensing devices, like CCDs, a small number of defective image elements (pixels), caused by a variety of manufacturing deficiencies, must be tolerated, especially for low cost applications. The resulting image degradation should however be eliminated through a "bad pixel correction" mechanism. Permanently storing the manufactures "bad pixel map" in an additional memory device is expensive and continuously maintaining such map is complex. Evaluating a larger two-dimensional array to detect defective pixels "on the fly" is complex and still requires storing a multiple of rows, being expensive as well.

The herewith disclosed invention provides a mechanism to effectively detect defective pixels "on the fly" in a Bayer RGB type color image sensor. The presented invention is primarily intended to and is optimized for low cost applications. It calculates a variable threshold based on signal changes on nearby pixels of the same color within the same scanning row and checks if the signal change of the pixel under test exceeds said variable threshold. If yes, it further performs a plausibility check using nearby pixels of the other color in the same row.

In actual photographs, it is unlikely to find excessive peeks of just 1 pixel wide within an otherwise smooth image environment; a bad pixel could be assumed and should be corrected. However, an image area where the slope of signal change is significant, a steep change is more likely associated with a real pixel. In this case it should not be taken as a bad pixel and not be corrected. Such steep change could surely be assumed as being caused by a real image change rather than by a bad pixel, if neighboring pixels of another color show a similar steep change. If that decision would not be correct and that pixel would be in fact a bad pixel, not treating is as bad pixel and therefore not correcting it, would hardly be visible to the human eye as it is hidden under the other steep signal changes. The herewith disclosed invention implements these clauses in decision-making circuits and methods.

## Description of the drawings

In the accompanying drawings, forming a material part of this description, there is shown:

**Fig. 1 (Prior Art)** demonstrates a large image sensor array
**Fig. 2 (Prior Art)** shows the Bayer RGB layout
**Fig. 3 (Prior Art)** visualizes a concept of interpolating a field of 5 x 5 pixels to find a bad pixel
**Fig. 4** shows one example, according to this invention, with 9 pixels, 4 before and 4 behind the pixel P-UI = P5 under investigation.
**Fig. 5** visualizes the fact, that a sharp line in the image, normally affects more than just one color.
**Fig. 6** gives a coarse overview on the bad pixel correction method
**Fig. 7** gives a more detailed functional view on the method for bad pixel correction
**Fig. 8** shows the method close to a possible implementation.

## Description of the preferred embodiments

The objectives of this invention are to perform an effective bad pixel correction in a low cost application.

In large arrays of image sensing devices, arranged in a matrix of rows and columns, like CCDs, a small number of defective image elements (pixels), caused by a variety of manufacturing deficiencies, must be tolerated, especially for low cost applications. The reason may be, for example, manufacturing process defects, which may show up as dead spots (totally dark), hot spots (totally white) and weak spots. Such a defective pixel is generated not only as an initial defect, but it is also generated because of aging, as the solid-state image pick-up device is used for a long period time. Similar, such defective pixels may change with operating conditions, like temperature of the sensor or its supply voltage. The position of the defective pixel itself is fixed. Therefore, the image signal from the defective pixel is often corrected by storing the position thereof in advance. However, permanently storing the manufacturer's "bad pixel map" in an additional memory device is expensive and continuously maintaining such map is complex and it does not cure the problems with aging and with those problems related to varying operating conditions. Additional "on the fly" correction mechanisms are normally implemented.

The herewith disclosed invention relies exclusively on an "on the fly" correction method, (though it may be implemented as an addition to another method). And, as low cost implementation is a driving factor, it avoids storing multiple image lines for correction purposes; it relies on image sensor data available from the same scan line in an intelligent way. In a first step, it evaluates the signal change characteristic of the neighboring pixel, assuming that with a strong signal change in the neighboring pixels, a heavy change at the pixel under investigation could be expected and with only moderate changes in neighboring pixels only a smaller signal change could be expected for said pixel under investigation. A variable threshold is generated based on the before mentioned conclusions.

A further plausibility check uses the fact, that a typical narrow image line hits more than just a single color. Therefore when there is coincidence of a strong signal change for the pixel under investigation, and for another color pixel in the near vicinity, this is probably related to the real image content. If however a strong signal change for said pixel under investigation is to be found in an area of otherwise moderate signal change where no other color's pixel shows strong signal change as well, the probability for a bad pixel being just detected is high. The methods and algorithms of the herewith disclosed invention efficiently implement these clauses.

Fig 4 shows an example of a single line with **P-UI** as the "pixel under investigation". In this example it shows a chain of 9 pixels, with 4 pixels before (**P1** to **P4**) and 4 pixels after (**P6** to **P9**) said pixel under investigation **P-UI**; **P5** in the middle of said pixel chain is identical to said **P-UI**.

Fig 5 visualizes the fact, that an image line **LINE** with sharp edges, projected across the sensor array would normally hit multiple pixels of various colors in the near vicinity. **R, G** and **B** in Fig. 5 represent the red, green and blue pixels of said image sensor. Therefore only in rare cases would a pixel, with a signal strongly differing from nearby pixels of the same color, stand alone, without at least one of the closest pixels of an other color, strongly differing from their nearby pixels of the same color as well. The fact just described is used for said plausibility check, assuming a pixel is bad only if none of the closest pixels of an other color shows a signal strongly differing from nearby pixels of that same other color.

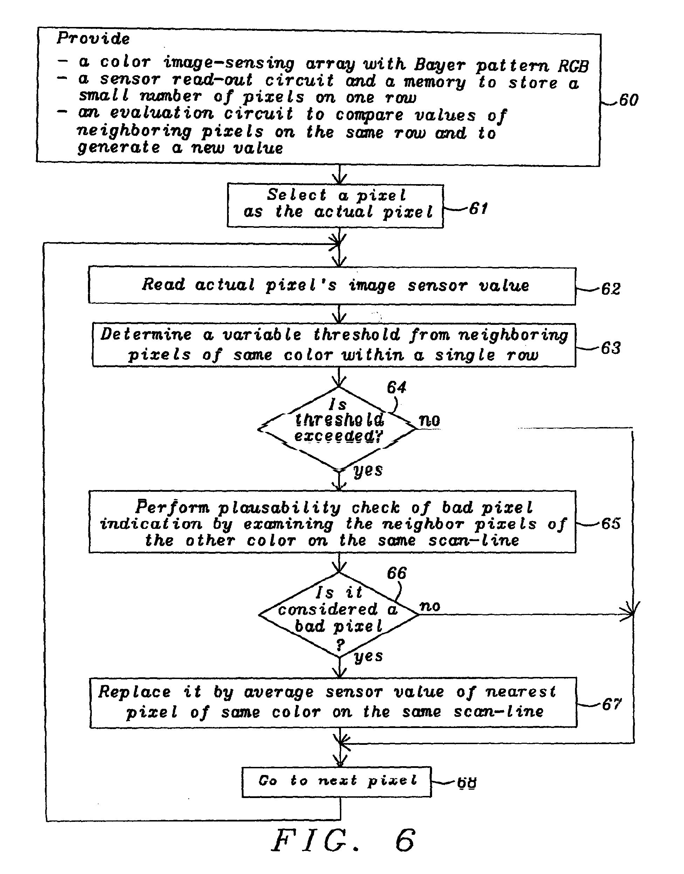

The principal method to achieve the objectives of this invention is illustrated in Fig. 6. First, provide, (**60**) a color image-sensing array with Bayer pattern RGB, a sensor read-out circuit and a memory to temporary store a small number of pixels on a single row, an evaluation circuits to compare values of neighboring pixels on the same row and a circuit to eventually replace said bad pixel with a newly generated value. Now, after reading in at least a few pixels, select a specific pixel as the pixel-under-investigation (**61**) and read its sensor value (**62**). Then determine a variable threshold from neighboring pixels of the same color within a single row (**63**). Check if the threshold is exceeded (**64**), if yes, the pixel may be bad, if no, pixel is good.

In case of a possibly bad pixel, perform said plausibility check of the just detected bad pixel indication by examining the neighbor pixels of the other color on the same scan-line (**65**). If the pixel under investigation is indeed to be considered a bad pixel (**66**), replace it by the average of the sensor values of nearest pixels of the same color on the same scan line (**67**). Now proceed to the next pixel (**68**) and repeat the process.

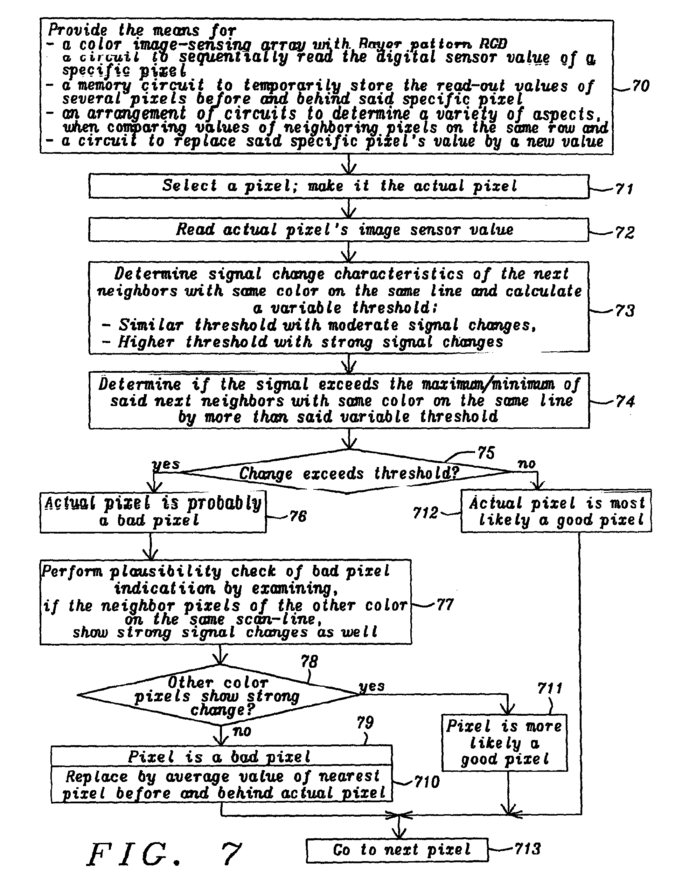

A more detailed description of a method to achieve the objectives of this invention is illustrated in Fig. 7. First, provide, (**70**) the means for a color image-sensing array with Bayer pattern RGB, a circuit to sequentially read the digital sensor value of a series of pixels, a memory circuit to temporarily store the read-out values of several pixels before and behind a specific pixel for investigation, an arrangement of circuits to determine a variety of aspects, when comparing values of neighboring pixels on the same row and a circuit to replace said specific pixel's value by a new value.

Now, after reading in at least a few pixels, select a specific pixel as the pixel-under-investigation (**71**) and read its sensor value (**72**). Then determine the sensor signal change characteristics of the next neighbors with the same color on the same line (**73**) and calculate a variable threshold - a smaller threshold in case of moderate signal changes and a higher threshold in case of strong signal changes. Next, determine if the sensor signal change characteristic falls within an anticipated range by determining whether the signal of said pixel-under-investigation exceeds the maximum/minimum of said next neighbors of the same color on the same line by more than said variable threshold (**74**) or not. If (**75**) it falls within said anticipated range it is most likely a good pixel (**712**). If however it exceeds the anticipated threshold, the pixel under investigation may be a bad pixel (**76**).

In case said pixel under investigation may be a bad pixel, perform said plausibility check (**77**) to find out if it is a true bad pixel. For this purpose, examine, if the neighbor pixels of an other color on the same scan-line, show strong signal changes as well. If neighbor pixels of an other color show strong change (**78**) as well, a strong signal change of the pixel under investigation could be anticipated and the pixel is more likely a good pixel (**711**). If however the neighbor pixels of an other color show only moderate change, a strong signal change of the pixel under investigation indicates a truly bad pixel (**79**). In this case replace the detected bad pixel by an average value of the nearest pixels of the same color before and behind said pixel under investigation (**710**).

Continue with the next pixel (**713**).

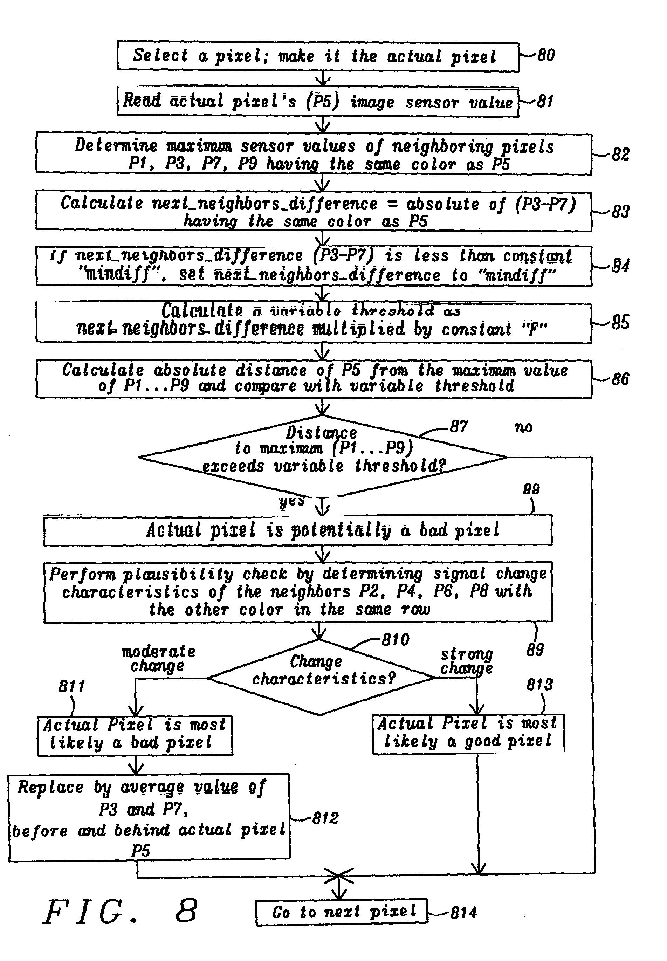

The following is one example for a detailed implementation of the algorithm for bad pixel detection and correction. The same method is also visualized in Fig. 8.
Start with characterization of a specific pixel under investigation after a few pixels have been read in one sensor row (**80**)(**81**).

Algorithm 1:

To begin, prepare some constants are defined: offset, mindiff, correction factor f.
    const f = 1.0;
    const offset = 10;
    const mindiff = 8;

Determine max/min sensor values of neighboring pixels P1, P3, P7, P9 having the same color as P-UI = P5 (**82**).

Algorithm 2:

Then the maximum value of pixels P1, P3, P7, P9 is determined and the minimum value of pixels P1, P3, P7, P9 is determined.

    max=P1;
        if (max<P3) then max = P3;
        if (max<P7) then max = P7;
        if (max<P9) then max = P9;

    min = P1;
        if (min>P3) then min = P3;
        if (min>P7) then min = P7;
        if (min>P9) then min = P9;
        Evaluate the signal change characteristic of the neighboring pixel, assuming that with a strong signal change in the neighboring pixels, a strong change at the pixel under investigation could be expected and with only moderate changes in neighboring pixels only a smaller signal change could be expected for said pixel under investigation.

Algorithm 3:

Calculate the absolute difference of the next neighbor pixels P3 - P7 (**83**). But if said absolute difference of pixels P3 - P7 is smaller than the constant mindiff, set said absolute difference to the value of mindiff (**84**), thus defining a variable threshold. (**85**)

next_neighbors_difference = abs(P3-P7);
if (next_neighbors_difference < mindiff) then next_neighbors_difference = mindiff;

Algorithm 4:

If the value of P-UI = P5 exceeds the maximum of pixels P1, P3, P7 and P9 by more than the absolute difference of P3 - P7, multiplied by f, or If the value P-UI = P5 falls below the minimum of pixels P1, P3, P7 and P9 by more than the absolute difference of P3 - P7, multiplied by f, (**86**) then the pixel is a candidate for a bad-pixel. (**87**)

$$bad\text{-}pixel\text{-}candidate\text{-}high = (P5>(max+f*next\_neighbors\_difference));$$

$$bad\text{-}pixel\text{-}candidate\text{-}low = (P5<(min-f*next\_neighbors\_diffierence));$$

If a pixel is a candidate for a bad pixel (**88**), said plausibility check is done by looking at the intermediate color pixels (**89**). The correction of the pixel is done only, if in the intermediate color no peak in the intensity is visible.

Algorithm 5:

If the pixel is a candidate for bad-pixel, being excessive high,
and P4 is smaller or equal to P2 plus offset
or P4 is smaller or equal to P8 plus offset
and P6 is smaller or equal to P2 plus offset
or P6 is smaller or equal to P2 plus offset
or if the pixel is a candidate for bad-pixel, being excessive low,
and P4 is greater or equal to P2 minus offset
or P4 is greater or equal to P8 minus offset
and P6 is greater or equal to P2 minus offset
or P6 is greater or equal to P2 minus offset
the pixel is a bad pixel
if (bad-pixel-candidate-high) then
bad-pixel-candidat-hi = (((P4< = P2+offset) ‖ (P4< = P8+offset)) && ((P6< = P2+offset) ‖ (P6< = P8+offset)));
if (bad_pixel_ candidate-low) then
bad-pixel-candidat-lo = (((P4> = P2-offset) ‖ (P4> = P8-offset)) && ((P6> = P2-offset) ‖ (P6> = P8-off set)));
Finally a bad pixel correction is done, if said plausibility check results in the pixel under investigation being a true bad pixel (**811**), otherwise it is considered a good pixel (**813**). Said bad pixel is corrected by replacing its value with the average values of pixels P3 and P7. (**812**)

Algorithm 6:

If a pixel is a bad pixel, replace its value P-UI = P5 with the average of P3 and P7. if (bad-pixel-candidate-high ‖ bad-pixel-candidate-low) then

$$P5 = (P3+P7)/2;$$

Continue with the next pixel as a new pixel under investigation (**814**) and repeat the same process.
While the invention has been particularly shown and described with reference to the preferred embodiments thereof, it will be understood by those skilled in the art that various changes in form and details may be made without departing from the spirit and scope of the invention.

## EP 1 594 308 A1

**Claims**

1. A circuit implementing a bad pixel correction mechanism, operating in digital processing device, intended to detect "on the fly" a defective pixel in a large two dimensional array of color image sensing devices, and then correcting the read-out value of said defective pixel, to remove, the imperfections of the resulting image, comprising

   - means for a color image-sensing array with Bayer pattern RGB;
   - means to sequentially read the digital sensor value of a specific pixel under investigation;
   - means for a memory circuit to temporarily store the read-out values of several pixels before and behind said specific pixel under investigation within the same row;
   - means to determine a variable threshold from neighboring pixels of the same color within said same row;
   - means to detect if the absolute value of the signal of said specific pixel under investigation exceeds the level defined by said variable threshold, indicating a possibly defective pixel;
   - means to perform a plausibility check of above mentioned defective pixel indication by examining the neighbor pixels of the other color on the same row; and
   - a circuit to replace said value of the signal of said specific pixel under investigation by an average sensor value of nearest pixels of same color on the same row.

2. The circuit of claim 1 wherein said means for a color image sensing array with Bayer pattern RGB is a CCD type image sensor.

3. A method performing a bad pixel correction, operating in digital processing device, intended to detect "on the fly" a defective pixel in a large two dimensional array of color image sensing devices, and then correcting the read-out value of said defective pixel, to remove, the imperfections of the resulting image, comprising, means for a color image sensing array with Bayer pattern RGB; means to sequentially read the digital sensor value of a specific pixel under investigation; means for a memory circuit to temporarily store the read-out values of several pixels before and behind said specific pixel under investigation within the same row; means to determine a variable threshold from neighboring pixels of the same color within said same row; means to detect if the absolute value of the signal of said specific pixel under investigation exceeds the level defined by said variable threshold, indicating a possibly defective pixel, means to perform a plausibility check of above mentioned defective pixel indication by examining the neighbor pixels of the other color on the same row, and means to replace said value of the signal of said specific pixel under investigation by an average sensor value of nearest pixels of same color on the same row;

   - reading the digital sensor value of a specific pixel under investigation from a color image sensor array with Bayer pattern RGB;
   - storing the read-out values of several pixels before and behind said specific pixel under investigation within the same row in a temporary memory;

   determining a variable threshold from neighboring pixels of the same color within said same row;

   - detecting if the absolute value of the signal of said specific pixel under investigation exceeds the level defined by said variable threshold, indicating a possibly defective pixel;
   - performing a plausibility check of the above mentioned defective pixel indication by examining the neighbor pixels of the other color on the same row; and
   - replacing said value of the signal of said specific pixel under investigation by an average sensor value of nearest pixels of same color on the same row in the case when said specific pixel under investigation is finally defined as being defective.

4. The method of claim 3 wherein determining a variable threshold from neighboring pixels uses the maximum or minimum value of any of said neighboring pixels with the same color as a base threshold.

5. The method of claim 3 wherein determining a variable threshold from neighboring pixels is further based on the signal differences found among the next neighbors with the same color before and behind said specific pixel under investigation.

6. The method of claim 3 wherein performing a plausibility check is based on the signal differences found among the next neighbors with the other color before and behind said specific pixel under investigation.

6

7. The method of claim 6 wherein performing a plausibility check is further based on an additional predefined offset value.

8. The method of claim 7 wherein said predefined offset is a variable value, calculated during the ongoing bad pixel correction process.

9. The method of claim 3 wherein temporarily storing and then processing several pixels before and behind said specific pixel under investigation within the same row uses 2 pixels before and 2 pixels behind said specific pixel under investigation with the same color as said specific pixel under investigation and uses 2 pixels before and 2 pixels behind said specific pixel under investigation with the other color.

10. The method of claim 5 wherein determining a variable threshold from neighboring pixels is further based on the signal differences found among the next neighbors with the same color, uses just the two next neighbors with the same color, one before and one behind said specific pixel under investigation to calculate such signal difference.

11. The method of claim 5 wherein determining a variable threshold from neighboring pixels is further based on the signal differences found among the next neighbors with the same color, and an additional weighting factor of such differences is added.

12. The method of claim 3 wherein replacing said value of the signal of said specific pixel under investigation by an average sensor value of nearest pixels of same color on the same row uses just the two next neighbors with the same color, one before and one behind said specific pixel under investigation.

COL SENS MATRIX

FIG. 1 - Prior Art

RED     GREEN

| R | G | R | G | R | G |
| G | B | G | B | G | B | ~ BLUE
| R | G | R | G | R | G |
| G | B | G | B | G | B |

FIG. 2 - Prior Art

FIG. 3 — Prior Art

FIG. 4

FIG. 5

Provide

- a color image-sensing array with Bayer pattern RGB
- a sensor read-out circuit and a memory to store a small number of pixels on one row
- an evaluation circuit to compare values of neighboring pixels on the same row and to generate a new value

—60

Select a pixel as the actual pixel —61

Read actual pixel's image sensor value —62

Determine a variable threshold from neighboring pixels of same color within a single row —63

64
Is threshold exceeded? — no

yes

Perform plausability check of bad pixel indication by examining the neighbor pixels of the other color on the same scan-line —65

66
Is it considered a bad pixel ? — no

yes

Replace it by average sensor value of nearest pixel of same color on the same scan-line —67

Go to next pixel —68

FIG. 6

Provide the means for
- a color image-sensing array with Bayer pattern RGD
- a circuit to sequentially read the digital sensor value of a specific pixel
- a memory circuit to temporarily store the read-out values of several pixels before and behind said specific pixel  ⌐70
- an arrangement of circuits to determine a variety of aspects, when comparing values of neighboring pixels on the same row and
- a circuit to replace said specific pixel's value by a new value

Select a pixel; make it the actual pixel  ⌐71

Read actual pixel's image sensor value  ⌐72

Determine signal change characteristics of the next neighbors with same color on the same line and calculate a variable threshold:
- Similar threshold with moderate signal changes,
- Higher threshold with strong signal changes  ⌐73

Determine if the signal exceeds the maximum/minimum of said next neighbors with same color on the same line by more than said variable threshold  ⌐74

Change exceeds threshold?  ⌐75

yes    no

Actual pixel is probably a bad pixel  ⌐76

Actual pixel is most likely a good pixel  ⌐712

Perform plausibility check of bad pixel indication by examining, if the neighbor pixels of the other color on the same scan-line, show strong signal changes as well  ⌐77

Other color pixels show strong change?  78

yes

no  79

Pixel is more likely a good pixel  711

Pixel is a bad pixel
Replace by average value of nearest pixel before and behind actual pixel  ⌐710

*FIG. 7*

Go to next pixel  ⌐713

11

Select a pixel; make it the actual pixel ~80

Read actual pixel's (P5) image sensor value ~81

Determine maximum sensor values of neighboring pixels
P1, P3, P7, P9 having the same color as P5 ~82

Calculate next_neighbors_difference = absolute of (P3–P7)
having the same color as P5 ~83

If next_neighbors_difference (P3–P7) is less than constant
"mindiff", set next_neighbors_difference to "mindiff" ~84

Calculate a variable threshold as
next_neighbors_difference multiplied by constant "F" ~85

Calculate absolute distance of P5 from the maximum value
of P1...P9 and compare with variable threshold ~86

Distance
to maximum (P1...P9)
exceeds variable threshold? ~87          no

88

yes

Actual pixel is potentially a bad pixel

Perform plausibility check by determining signal change
characteristics of the neighbors P2, P4, P6, P8 with
the other color in the same row

moderate
change
811

Change
characteristics? ~810

strong
change
89

813

Actual Pixel is most
likely a bad pixel

Actual Pixel is most
likely a good pixel

Replace by average value of
P3 and P7,
before and behind actual pixel
P5 ~812

FIG. 8          Go to next pixel ~814

**European Patent Office**

# EUROPEAN SEARCH REPORT

Application Number

EP 04 39 2022

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 401 196 A (AGILENT TECHNOLOGIES INC) 24 March 2004 (2004-03-24)<br>* paragraph [0008] - paragraph [0011] *<br>* paragraph [0015] - paragraph [0041] *<br>* paragraph [0045] *<br>* paragraph [0054] - paragraph [0061] *<br>----- | 1-6,9,12 | H04N5/217 |
| A | EP 1 045 578 A (TEXAS INSTRUMENTS INC) 18 October 2000 (2000-10-18)<br>* paragraph [0024] - paragraph [0034] *<br>----- | 1,3,12 | |
| A | US 2003/151682 A1 (YAMAMOTO KATSUYOSHI ET AL) 14 August 2003 (2003-08-14)<br>----- | | |
| A | WO 2004/004319 A (KUMAR PARIKSHIT ; CASTELLO CRISTIANO (NL); KONINKL PHILIPS ELECTRONICS) 8 January 2004 (2004-01-08)<br>----- | | |

**TECHNICAL FIELDS SEARCHED (Int.Cl.7)**

H04N

The present search report has been drawn up for all claims

| Place of search | Date of completion of the search | Examiner |
|---|---|---|
| The Hague | 29 September 2004 | Wentzel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 39 2022

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2004

| Patent document cited in search report | | | Publication date | Patent family member(s) | | | Publication date |
|---|---|---|---|---|---|---|---|
| EP 1401196 | A | | 24-03-2004 | US | 2004051798 | A1 | 18-03-2004 |
| | | | | EP | 1401196 | A1 | 24-03-2004 |
| | | | | JP | 2004112802 | A | 08-04-2004 |
| EP 1045578 | A | | 18-10-2000 | AT | 247885 | T | 15-09-2003 |
| | | | | DE | 60004595 | D1 | 25-09-2003 |
| | | | | DE | 60004595 | T2 | 18-03-2004 |
| | | | | EP | 1045578 | A2 | 18-10-2000 |
| | | | | EP | 1067775 | A2 | 10-01-2001 |
| | | | | JP | 2000285229 | A | 13-10-2000 |
| | | | | US | 2004169746 | A1 | 02-09-2004 |
| | | | | JP | 2000298464 | A | 24-10-2000 |
| | | | | US | 6788340 | B1 | 07-09-2004 |
| US 2003151682 | A1 | | 14-08-2003 | JP | 2003234958 | A | 22-08-2003 |
| WO 2004004319 | A | | 08-01-2004 | WO | 2004004319 | A1 | 08-01-2004 |

EPO FORM P0459

For more details about this annex : see Official Journal of the European Patent Office, No. 12/82